# EUROPEAN PATENT APPLICATION

(11) **EP 1 612 229 A1**
(43) Date of publication of application: **04.01.2006**
(21) Application number: 04425469.6
(22) Date of filing: 30.06.2004
(51) Int. Cl.: C08G 18/48, C08G 18/76, A47C 27/00

(54) **Expanded polyurethane material for preparing mattresses**

(71) Applicant: B & T S.p.A., 47100 Forli' (Forli' Cesena) (IT)
(72) Inventor: Tura, Diano, 47100 Forli' (Forli' Cesena) (IT)
(74) Representative: Tansini, Elio Fabrizio

(57) **Abstract**

The present invention relates to an expanded polyurethane material for preparing manufactured items such as mattresses. In particular, the present invention relates to an expanded material in the form of a solid state foam for preparing mattresses.

## Description

The present invention relates to an expanded polyurethane material for preparing manufactured items such as mattresses. In particular, the present invention relates to an expanded material in the form of a solid state foam for preparing mattresses.

At present, it is known about several ways for manufacturing mattresses. As a matter of fact, the following types of products can be found on the market:
➢ Mattresses with traditional Bonnel spring system with different stiffness. The different stiffness depends on the diameter of the steel wire which the spring is made up of. Said diameter can be of 1.60 to 2.50 mm.
➢ Mattresses with LFK spring system with different stiffness. The different stiffness depends on the diameter of the steel wire which the spring is made up of. Said diameter can be of 1.60 to 2.50 mm.
➢ Mattresses with independent springs, packed and connected one to the other by hot gluing.
➢ Mattresses made of talalay latex with different sections and differentiated thicknesses.
➢ Mattresses made of 100% natural latex with different sections and differentiated thicknesses.
➢ Mattresses made of polyurethane with different sections and differentiated thicknesses.

However, the aforesaid types of mattresses are not without drawbacks.

As a matter of fact, problems that have not yet been solved today are related to low transpiration, aeration and ventilation of latex and/or polyurethane mattresses with respect to spring mattresses.

Moreover, there are further problems related to the intrinsic features of mattresses due to their low ergonomicity.

As a matter of fact, ergonomics refers to product capacity of matching body shape, thus minimizing articular stresses. A non-ergonomic mattress then creates too large a number of pressure points on the human body.

Low perspiration/transpiration (low "breathing" capacity) refers to a reduced air passage from inside the mattress to outside as transpiration feature of a porous material.

Low ventilation and aeration refer to a reduced passage of an air flow for a porous material.

Low transpiration and aeration immediately result in a sensation of too much warmth transmitted to the user of a latex and/or polyurethane mattress with respect to the user of a spring mattress.

Furthermore, for latex mattresses low transpiration can be a potential source of moisture accumulation inside the mattress.

Therefore, there is the need for a material for preparing mattresses without the drawbacks of market-available mattresses.

In particular, there is the need for a material for preparing mattresses having better features of transpiration, aeration and ventilation. Said material should further be anallergic, flexible, elastic and ergonomic, so that the mattress thus manufactured can suit and match the position of the user's body.

The present invention therefore aims at producing a material for preparing mattresses with improved features with respect to market-available mattresses.

This aim and others that shall be evident from the following detailed description have been achieved by the Applicant, who proposes an expanded material having a specific and particular cell structure.

An object of the present invention is therefore a mattress made of expanded polyurethane material, whose characteristics are listed in the appended claims.

Another object of the present invention is a process for preparing said mattress, whose characteristics are listed in the appended claims.

The Applicant has found it useful to choose a particular formulation of an expanded material in the form of solid state foam having an inner cell structure made up of open cells.

The expanded material has an inhomogeneous irregular structure made up of open cells, having a higher transpiration and porosity with respect to known expanded materials.

This structure is achieved when the polymer obtained between polyol and diisocyanate is expanded.

The expansion step is controlled and modulated thanks to a given selected component (de-stabilizer) enabling to act physically upon the expansion reaction.

The component selected by the Applicant acts by destabilizing physically, and not chemically, the outer surface of the carbon dioxide bubble (delimited by the developing polymer) created during polymer expansion.

The component selected by the Applicant acts by destabilizing physically the outer surface of the bubble by varying the surface tension of the outer surface of the developing bubble.

The selected component is a de-stabilizer which, during the expansion step, modifies the surface tension of the outer surface of the developing bubble, so as to open (break) the carbon dioxide bubble. This occurs simultaneously to the expansion of the polymeric material.

Once the outer surface of the carbon dioxide bubble is opened (broken), there is a re-distribution of the developing polymer building the outer surface of said bubble. This polymer re-distribution enables to obtain a three-dimensional structure characterizing the expanded material according to the invention.

In other words, polymer re-distribution during expansion according to the mechanism mentioned above allows to obtain an expanded material with an inhomogeneous irregular structure made up of open cells.

The process according to the invention includes a first step in which the polyol suitably thermostated, water (if necessary) and the de-stabilizer are charged into a vessel equipped with mechanical stirring means.

After adding the diisocyanate the reaction is carried out under stirring for such a time as to start the chemical reaction that turns the components into an expanded cell material.

In practice, the expanded formulation is obtained from a mixture comprising the following components.

### a) A polyol (main reagent), commonly used in the field of expanded polyurethane materials.

Said polyol has for instance (at a temperature of 20°C and atmospheric pressure) a specific weight of 0.90 to 1.10; advantageously of about 1.046. Said polyol has furthermore a viscosity of 1600 to 1800 mPa.s; advantageously of about 1740 mPa.s.

Said compound is used in an amount of 100 parts by weight.

### b) A diisocyanate (main reagent), for instance a diphenylmethane diisocyanate (MDI).

Said diisocyanate has for instance (at a temperature of 25°C and atmospheric pressure) a density of 1.10 to 1.30 g/cm³; advantageously of about 1.20 g/cm³.

Said diisocyanate has furthermore a viscosity of 50 to 70 mPa.s; advantageously of about 60 mPa.s. The % value of NCO isocyanate (adjusted for hydrolysable chlorine) is of 29.80%.

Preferably, said diisocyanate is used in an amount of 30 to 60 parts by weight; more preferably of 40 to 55 parts by weight; advantageously of 45 to 50 parts by weight.

### c) A first polyether triol (obtained from ethylene oxide) with a density at 25°C and atmospheric pressure of 1.05 to 1.25 g/cm³; advantageously of 1.13 g/cm³.

Said first polyether triol further has a viscosity of 290 to 400 mPa.s; advantageously of about 345 mPa.s. The hydroxyl number in mg KOH/g is of about 127.50 and water content is below about 0.10% with respect to the composition containing the polyether triol.

Said component is present in the formulation in an amount of 1 to 3 parts by weight; preferably of 1.2 to 2.5 parts by weight; advantageously of 1.3 to 1.8 parts by weight.

For instance, said first polyether triol is Daltocel®F526 produced by Huntsman.

### d) A second polyether triol (obtained from ethylene oxide) with a density at 25°C and atmospheric pressure of 0.90 to 1.15 g/cm³; advantageously of 1.02 g/cm³.

Said second polyether triol further has a viscosity of 1050 to 1250 mPa.s; advantageously of about 1175 mPa.s. The hydroxyl number in mg KOH/g is of about 28 and water content is below about 0.10% with respect to the composition containing the polyether triol.

Said component is present in the formulation in an amount of 0.1 to 1 part by weight; preferably of 0.2 to 0.6 parts by weight; advantageously of 0.3 to 0.5 parts by weight.

For instance, said second polyether triol is Daltocel®F428 produced by Huntsman.

### e) The de-stabilizer is chosen among silicone compounds. It can be mixed with the second polyether triol and is used in a weight ratio of 1:100 to 1:300 with respect to the second polyether triol; preferably in a ratio of 1:150 to 1:200.

The de-stabilizer is for instance a non-reticulated product with a density at 23°C and atmospheric pressure of 1.10 to 1.30 g/cm³; advantageously of about 1.23 g/cm³. The de-stabilizer has a viscosity of 10,000 to 13,500 mPa.s; advantageously of about 12,000 mPa.s (ISO 3219).

For instance, said stabilizer is Elastosil®M4441 produced by Wacker.

The reaction between polyol and diisocyanate is catalyzed through suitable catalysts known to the person skilled in the art.

A water fraction (if necessary) is added to the components present in the reaction so as to affect reaction development during expansion. Said water fraction is of 0.1 to 1 part by weight; preferably of 0.5 to 0.9 parts by weight; advantageously of 0.7 to 0.8 parts by weight.

From a chemical point of view, the material thus obtained can be included among polyurethane materials. However, the polyurethane material according to the present invention differs from known polyurethane materials in its peculiar inner three-dimensional structure.

The polyurethane material according to the present invention is an expanded material with a three-dimensional structure characterized by a three-dimensional structure comprising time-stable open cells.

The majority of open cells inside the structure intercommunicate one with another, thus enabling to obtain a material with a high transpiration.

In practice, the Applicant has improved a particular chemical/mechanical process which enables to obtain an expanded polyurethane material starting from the formulation described above.

The Applicant's process enables to obtain a stable non-collapsing structure.

The process for preparing the flexible polyurethane foam includes the following steps.

The polyol (main reagent), said first polyether triol, water (if necessary) and said second polyether triol, the latter being previously mixed with the silicone de-stabilizer, are introduced into a container equipped with heating and stirring means, thus obtaining a homogenous mixture.

Preferably, the homogenous mixture can now be let rest for a period of 1 to 10 minutes, for instance 5 minutes. Then diphenylmethane diisocyanate is added to said homogenous mixture under mechanical stirring, thus obtaining the expanded polymeric material according to the present invention.

Said polymeric material is eventually poured into a suitable mold for mattresses.

The reaction between the components of the formulation, when the latter are mixed together, is extremely complex and isothermal with carbon dioxide release.

The use of said second polyether triol mixed with the silicone de-stabilizer adjusts reaction speed between polyol and diisocyanate, reaction speed between diisocyanate and water and simultaneously formation speed of an open cell structure.

Said reaction causes a strong volumetric expansion of about 200 times the initial volume.

The invention has been developed by means of a strict control on all physical/mechanical parameters involved in the reaction, such as: temperature, which is kept constant around 23 to 25°C; length of mold discharge times and mixing times for the components and mixing speed, which is of about 1200 rpm.

The choice and adjustment of all aforesaid parameters enables to obtain an expanded material with a density of 45 to 55 kg/m³; preferably of 48 to 53 kg/m³; advantageously of 50 kg/m³.

Transpiration in liters/seconds refers to the resistance met by a given air flow (according to techniques known to people skilled in the art) when getting through a porous material or foam.

A value near zero means that the material has a high transpiration. Conversely, a value far from zero, for instance of 6, 8, 10 or higher than 10, means that the material has lower and lower transpiration or no transpiration at all.

Transpiration for the material according to the present invention is of 2.5 to 5.0 liters of air per minute/cm²; advantageously of 3 to 4.

Therefore, thanks to its cell structure the expanded material according to the invention enables to prepare mattresses with improved transpiration, aeration and ventilation, which features help to obtain a higher air conditioning of the mattress, however keeping its anallergic and elastic properties for a long time.

The cell structure of the material according to the present invention enables to prepare mattresses with a high reduction of the amount of inner moisture.

## Claims

**1.** A process for preparing a mattress made of expanded polyurethane material, comprising the following steps:
- mixing a polyol, a first polyether triol, a second polyether triol, a silicone de-stabilizer and, if necessary, water;
- adding to said mixture a diphenylmethane diisocyanate, thus obtaining an expanded polymeric material;
- introducing said polymeric material into a mold, thus obtaining a mattress.

**2.** The process according to claim 1, in which the polyol has a specific weight of 0.90 to 1.10 and a viscosity of 1600 to 1800 mPa.s.

**3.** The process according to claim 2, in which said polyether is present in an amount of 100 parts by weight.

**3.** The process according to claim 1, in which the diphenylmethane diisocyanate (MDI) has a density of 1.10 to 1.30 g/cm³ and a viscosity of 50 to 70 mPa.s.

**4.** The process according to claim 3, in which said diisocyanate is present in an amount of 30 to 60 parts by weight; preferably of 40 to 55 parts by weight.

**5.** The process according to claim 1, in which said first polyether triol has a density of 1.05 to 1.25 g/cm³ and a viscosity of 290 to 400 mPa.s.

**6.** The process according to claim 5, in which said first polyether triol is present in an amount of 1 to 3 parts by weight; preferably of 1.2 to 2.5 parts by weight.

**7.** The process according to claim 1, in which said second polyether triol has a density of 0.90 to 1.15 g/cm³ and a viscosity of 1050 to 1250 mPa.s.

**8.** The process according to claim 7, in which said second polyether triol is present in an amount of 0.1 to 1 part by weight; preferably of 0.2 to 0.6 parts by weight.

**9.** The process according to claim 1, in which the de-stabilizer is chosen among non-reticulated silicone compounds having a density of 1.10 to 1.30 g/cm³ and a viscosity of 10,000 to 13,500 mPa.s.

**10.** The process according to claim 9, in which the de-stabilizer is present in a weight ratio of 1:100 to 1:300 with respect to the second polyether triol; preferably in a ratio of 1:150 to 1:200.

**11.** The process according to claim 1, in which water is present in an amount of 0.1 to 1 part by weight; preferably of 0.5 to 0.9 parts by weight.

**12.** A mattress obtained from a process according to one or more claims 1-11.

**13.** The mattress according to claim 12, in which transpiration value is of 2.5 to 5.0 liters of air pro minute/cm²; preferably of 3 to 4.
